# EUROPEAN PATENT SPECIFICATION

(11) **EP 2 253 840 B1**
(45) Date of publication and mention of the grant of the patent: **29.02.2012**
(21) Application number: 10162849.3
(22) Date of filing: 14.05.2010
(51) Int. Cl.: F03D 1/06, F03D 7/02

(54) **Wind turbine and blade pitch adjusting device**
Windturbine und Einrichtung zur Verstellung des Blatteinstellwinkels
Une éolienne et un dispositif pour le réglage de l'angle des pales

(30) Priority: 20.05.2009 IT MC20090122
(43) Date of publication of application: 24.11.2010
(73) Proprietor: Mait - S.P.A., 60027 Osimo (AN) (IT)
(72) Inventor: Siniscalchi, Sandro, 60027, Osimo (AN) (IT)
(74) Representative: Baldi, Claudio

(56) References cited:
- WO-A1-2007/012487
- WO-A1-2008/068373

## Description

The present patent application for industrial invention relates to an eolian turbine, and in particular to an adjusting device of the blade pitch.

As it is known, an eolian turbine comprises a hub revolvingly mounted on a nacelle supported by a tower. A plurality of blades is radially mounted on the hub to exploit the thrust of the wind. The assembly of hub and blades is the aerodynamic rotor. A shaft, defined as slow speed shaft, is joined to the hub and connected to a rotor of an electrical generator for production of electricity.

Obviously, the speed of the wind changes continuously in an unpredictable uncontrollable way. When the speed of the wind increases, also the supplied power increases and consequently, the loads on the turbine increase according to the increment of the speed of the wind squared. To avoid damage, without having to design the turbine for any speed of the wind (since it would be uneconomic) it is necessary to limit the power and design the turbine according to said limit. The systems that are commonly used to limit power in turbines with horizontal axis (i.e. the most popular systems) are:
- controlling the variation of the blade pitch, and
- controlling the (active or passive) stall of the blades.

Leaving aside the case of passive stall control, for which the blade does not rotate entirely, the other two cases will be considered, in which the blades are rotated around their longitudinal axis by hydraulic or electromechanical actuators.

The rotation of the blades induces a variation of the incidence angles with respect to the air current and therefore a variation of the aerodynamic characteristics of the aerodynamic rotor (being said characteristics related to the forces).

### Pitch variation control

In this case, a sensor reads the electrical power supplied by the generator and when it exceeds the nominal value, the electronics imposes an increase of the pitch that reduces the power, bringing it back below the nominal value. On the contrary, when the wind goes down and power drops below the nominal value, the electronics imposes a reduction of the pitch.

In a situation with high turbulent wind, the actuation devices are particularly stressed.

Examples of prior art pitch changing devices can be found e.g. in WO 2007/012487 A1 and in WO 2008/068373 A1.

### Active stall control

In this case the control of the electrical power of the generator occurs, when the speed of the wind increases, by exceeding the stall incidence angle beyond which a considerable reduction of the aerodynamic characteristics of the hub is obtained.

The conditions in which stall occurs can be changed by changing the coupling of the blade with respect to the hub. This is obtained by means of hydraulic or electromechanical mechanisms, such as in the case of pitch variation control.

In case of active stall control, variations are much slower than pitch variation control, but the actuation system is subject to considerable stress because it represents a constraint to the torsion of the blade.

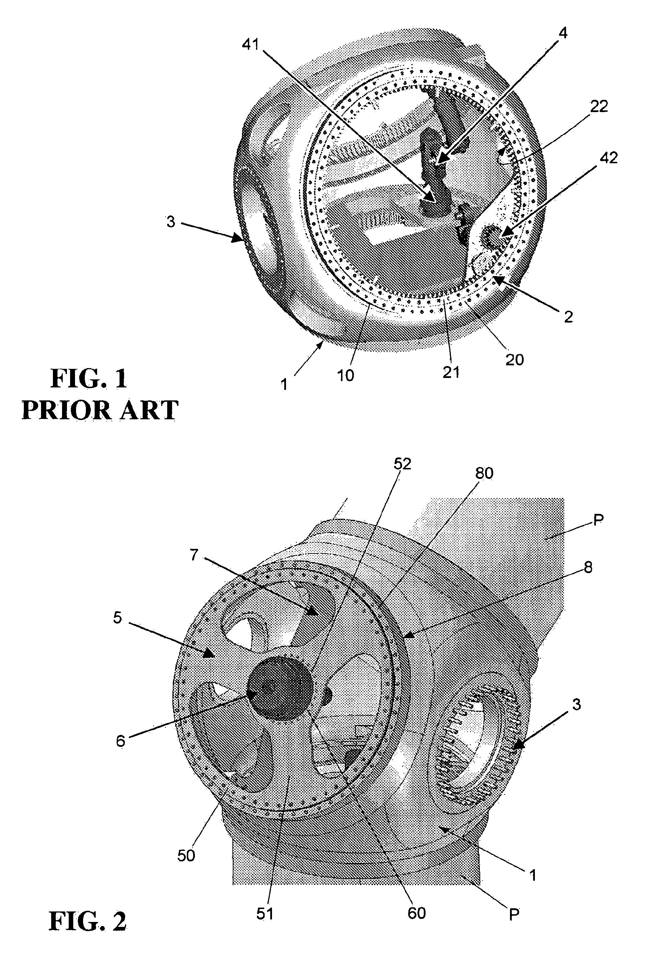

Fig. 1 is a diagrammatic view of a hub according to the prior art, which is generally indicated with numeral (1). The hub (1) comprises a plurality of circular housings (10) (three housings are illustrated in the figure) for fixing the blades and a circular flange (3) for fixing the slow speed shaft.

A bearing (2) is disposed in each housing (10). The external ring (20) of the bearing (2) is fixed to the housing of the hub (1); whereas the internal ring (21) of the bearing is fixed to the attachment of the blade. The internal ring (21) of the bearing is provided with internal toothing (22) in such a way to generate a thrust block or tooth wheel (21).

An electrical motor (4) is jointly disposed inside the hub (1) to rotate a pinion (42) that engages on the internal toothing (22) of the internal ring (21) of the bearing. A reduction gear (41), such an epicyclical reducer with multiple stages, is interposed between electrical motor (4) and pinion (42).

During the normal operation of the hub (1) cyclic forces are developed, which tend to open and close, at every revolution of the hub (1), the pinion (42) - toothed wheel (21) coupling.

Therefore, high wear and localized corrosion (pitting) of the toothing that work along an arch of about 90° are generated.

In the attempt to limit such a drawback, the toothing of pinion (42) and toothed wheel (21) must be suitably dimensioned, in such a way they can adequately withstand the fatigue stress.

In any case, expensive maintenance works are necessary on the toothed wheel, because of the fact that, by working along an arch of 90°, after a certain number of operation cycles, it wears out and must be rotated to engage another wear-free arch of 90°. Such a repositioning implies the disassembly of the blade that is made with expensive external cranes.

Moreover, it must be considered that the pinion (42) - toothed wheel (21) coupling needs grease lubrication that does not favor ideal working conditions.

The purpose of the present invention is to eliminate the drawbacks of the prior art, by disclosing an eolian turbine provided with adjusting device of the blade pitch that is efficient, efficacious, versatile and reliable.

Another purpose of the present invention is to provide such an eolian turbine provided with adjusting device of the blade pitch that is inexpensive and easy to install and maintain.

These purposes are achieved by the present invention, the features of which are claimed in the independent claim 1.

Advantageous embodiments are disclosed in the dependent claims.

The eolian turbine of the invention provides for an adjusting system of the blade pitch, in which the pinion-toothed wheel coupling is eliminated, connecting the output rotary case of the reduction gear directly with the ring of the bearing joined with the blade.

To do so, two plates are necessary: a plate joined with the hub (fixed part with respect to the blade) to which the fixed case of the motor is connected, and a plate joined with the blade to which the rotary case of the geared motor is connected.

The following advantages are obtained with the proposed solution:
- general cost reduction; as a matter of fact, the elimination of pinion and toothing on the ring of the bearing of the blade largely makes up for the addition of the plates and of an additional epicyclical stage in the geared motor.
- Optimized working conditions of gears that work in oil bath being closed in the case of the reduction gear.
- Elimination of pitting problems on toothing.
- Elimination of expensive maintenance works on the toothed wheel.

Additional characteristics of the invention will become evident from the detailed description below, which refers to a merely illustrative, not limiting, embodiment, as shown in the enclosed figures, wherein:
Fig. 1 is a diagrammatic perspective view of a hub of an eolian turbine according to the prior art, in which the adjusting system of the blade pitch is shown;
Fig. 2 is a diagrammatic perspective view of a hub of an eolian turbine according to the invention;
Fig. 3 is a cutaway view of the hub of Fig. 2, in which the adjusting system of the blade pitch is shown.

In the following text identical elements or elements that correspond to elements that have already been described are indicated with the same reference numerals, omitting their detailed description.

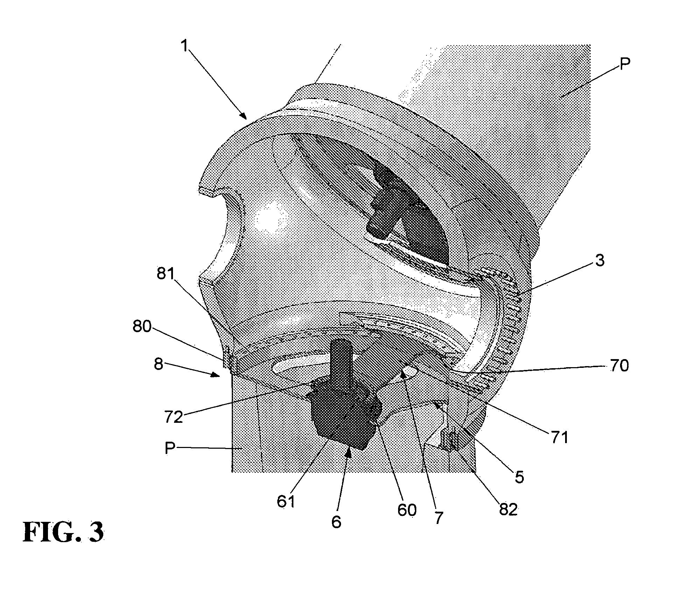

Figs. 2 and 3 show a hub (1) with two blades (P) illustrated as interrupted.

According to the invention each blade (P) is joined to a mobile plate (5). The mobile plate (5) comprises a peripheral ring (50) connected by means of radial spokes (51) to a central flange (52).

The mobile plate (5) is revolvingly mounted in the corresponding circular housing of the hub (1) by means of a ball or roll bearing (8). In view of the above, the external ring (80) of the bearing (8) is joined to the hub (1); whereas the internal ring (81) of the bearing is joined to the peripheral part (50) of the mobile plate (5). Balls or rolls (82) are disposed between the external ring (80) and the internal ring (81).

The central flange (52) of the mobile plate is fixed to a rotary case (60) of a geared motor (6) that represents the outgoing stage of the geared motor. The geared motor (6) is disposed in axial position with respect to the mobile plate (5).

The geared motor (6) comprises an electrical motor and a reduction gear, composed for example of multiple stages of epicyclical reducers, in which the rotary case (60) of the outlet stage of the reducer is connected to the central flange (52) of the mobile plate (5).

The electrical motor of the geared motor (6) provides for a fixed case (61) that is fixed to the hub (1) by means of a fixed plate (7). The fixed plate (7) is provided with a central flange (72) from which at least two spokes (71) ending with a peripheral flange (70) branch off radially. Preferably, the fixed plate is provided with two spokes (70) arranged in diametrically opposite positions.

The central flange (72) of the fixed plate is fixed to the fixed case (61) of the motor of the geared motor; whereas the peripheral flange (70) of the fixed plate is fixed to the hub (1).

Numerous variations and modifications can be made to the present embodiment of the invention by an expert of the art, while still falling within the scope of the invention as claimed in the enclosed claims.

## Claims

1. Eolian turbine comprising:
- a hub (1) revolvingly mounted on a tower, around a basically horizontal axis, and provided with a slow speed shaft that drives into rotation a rotor of an electric generator,
- a plurality of blades (P) radially protruding from the hub (1) and revolvingly mounted around their axis, and
- an adjusting device of the blade pitch to adjust the angle of rotation of each blade around its axis;
**characterized in that**
the adjusting device of the blade pitch comprises a geared motor (6) comprising:
- a rotary case (60) of the output stage of the reduction gear fixed to a mobile plate (5) joined to the blade (P) to allow for rotation of the blade (P) around its axis, and
- a fixed case (61) of the motor of the geared motor (6) fixed to a fixed plate (7) joined to the hub (1).

2. Eolian turbine as claimed in claim 1, **characterized in that** it comprises a bearing (8) comprising an internal ring (81) fixed to the mobile plate (5) and an external ring (80) fixed to the hub (1).

3. Eolian turbine as claimed in claim 1 or 2, **characterized in that** the geared motor (6) comprises an electric motor and an epicyclical reduction gear with multiple stages, in which the rotary case (60) of the output stage of the reduction gear is fixed to the mobile plate (5).

4. Eolian turbine as claimed in any of the above claims, **characterized in that** the geared motor (6) is arranged axially with respect to the mobile plate (5).

5. Eolian turbine as claimed in any of claims 2 to 4 **characterized in that** the mobile plate (5) comprises a peripheral ring (50) connected to a central flange (52) by means of a plurality of spokes (51), in which the peripheral ring (50) of the mobile plate is fixed to the internal ring (81) of the bearing and the central flange (52) of the mobile plate is fixed to the rotary case (60) of the output stage of the geared motor (6).

6. Eolian turbine as claimed in any of the above claims, **characterized in that** the fixed plate (7) comprises a central flange (72) fixed to the fixed case (61) of the motor of the geared motor and at least two radial spokes (70) that branch off from the central flange (72) ending in corresponding peripheral portions (70) fixed to the said hub.

## Patentansprüche

1. Windkraftanlage umfassend:
- eine Nabe (1), die auf einem Turm drehbar um eine im Wesentlichen horizontale Achse angebracht und mit einer langsamen Welle versehen ist, die den Rotor eines Stromgenerators in Drehung versetzt,
- mehrere Rotorblätter (P), die im Wesentlichen radial aus der Nabe (1) hervorstehen und um ihre eigene Achse drehbar angebracht sind, und
- eine Einstellvorrichtung für den Rotorblattabstand, um den Winkel der Drehung eines jeden Rotorblattes um seine eigene Achse einstellen zu können;
**dadurch gekennzeichnet, dass**
die Einstellvorrichtung für den Rotorblattabstand einen Getriebemotor (6) umfasst, umfassend:
- ein Drehgehäuse (60) der Ausgangsstufe des Getriebemotors, das auf einer beweglichen Platte (5) befestigt ist, die fest mit dem Rotorblatt (P) verbunden ist, um die Drehung des Rotorblattes (P) um seine eigene Achse zu ermöglichen, und
- einen starren Kasten (61) des Motors des Getriebemotors (6), der auf einer fest mit der Nabe (1) verbundenen, starren Platte (7) befestigt ist.

2. Windkraftanlage nach Anspruch 1, **dadurch gekennzeichnet, dass** sie ein Lager (8) umfasst, welches einen Innenring (81) umfasst, der an der beweglichen Platte (5) befestigt ist, und einen Außenring (80), der an der Nabe (1) befestigt ist.

3. Windkraftanlage nach Anspruch 1 oder 2, **dadurch gekennzeichnet, dass** der Getriebemotor (6) einen Elektromotor und ein mehrstufiges Umlaufuntersetzungsgetriebe umfasst, wobei das Drehgehäuse (60) der Ausgangsstufe des Untersetzungsgetriebes an der beweglichen Platte (5) befestigt ist.

4. Windkraftanlage nach einem beliebigen der vorstehenden Ansprüche, **dadurch gekennzeichnet, dass** der Getriebemotor (6) axial bezogen auf die bewegliche Platte (5) angeordnet ist.

5. Windkraftanlage nach einem beliebigen der vorstehenden Ansprüche 2 bis 4, **dadurch gekennzeichnet, dass** die bewegliche Platte (5) einen umlaufenden Ring (50) umfasst, der mittels mehrerer Speichen mit einem mittleren Flansch (52) verbunden ist, wobei der umlaufende Ring (50) der beweglichen Platte an dem Innenring (81) des Lagers befestigt ist, während der mittlere Flansch (52) der beweglichen Platte an dem Drehgehäuse (60) der Ausgangsstufe des Getriebemotors (6) befestigt ist.

6. Windkraftanlage nach einem beliebigen der vorstehenden Ansprüche, **dadurch gekennzeichnet, dass** die feste Platte (7) einen an dem starren Kasten (61) des Motors des Getriebemotors befestigten mittleren Flansch (72) und mindestens zwei, vom mittleren Flansch (72) ausgehende, in entsprechenden umlaufenden, an der Nabe befestigten Anteilen (70) endende, radiale Speichen (70) umfasst.

## Revendications

1. Turbine éolienne comprenant :
- un moyeu (1) monté pivotant sur une tourelle, autour d'un axe substantiellement horizontal, et doté d'un arbre lent qui met en rotation un rotor d'un générateur électrique,
- une pluralité de pales (P) qui débordent radialement du dit moyeu (1) et montées pivotantes autour de leurs axes, et
- un dispositif de réglage du pas des pales, pour régler l'angle de rotation de chaque pale autour de son propre axe ;
**caractérisée en ce que**
le dit dispositif de réglage du pas des pales comprend un motoréducteur (6) comprenant :
- un carénage rotatif (60) du stade de sortie du réducteur fixé sur une plaque mobile (5) solidaire à la dite pale (P) afin de permettre la rotation de la pale (P) autour de son propre axe, et
- un caisson fixe (61) du moteur du motoréducteur (6) fixé sur une plaque fixe (7) solidaire au dit moyeu (1).

2. Turbine éolienne selon la revendication 1, **caractérisée en ce qu'**elle comprend un palier (8) comprenant une bague interne (81) fixée à la dite plaque mobile (5) et une bague externe (80) fixée au dit moyeu (1).

3. Turbine éolienne selon la revendication 1 ou 2, **caractérisée en ce que** le dit motoréducteur (6) comprend un moteur électrique et un réducteur épicycloïdal à plusieurs stades, où le carénage rotatif (60) du stade de sortie du réducteur est fixé sur la dite plaque mobile (5).

4. Turbine éolienne selon l'une quelconque des revendications précédentes, **caractérisée en ce que** le dit motoréducteur (6) est disposé de manière axiale par rapport à la dite plaque mobile (5).

5. Turbine éolienne selon l'une quelconque des revendications de 2 à 4, **caractérisée en ce que** la dite plaque mobile (5) comprend une bague périphérique (50) reliée à une bride centrale (52) moyennant une pluralité de rayons (51), où la bague périphérique (50) de la plaque mobile est fixée sur la dite bague interne (81) du palier et la bride centrale (52) de la plaque mobile est fixée sur le dit carénage rotatif (60) du stade de sortie du motoréducteur (6).

6. Turbine éolienne selon l'une quelconque des revendications précédentes, **caractérisée en ce que** la dite plaque fixe (7) comprend une bride centrale (72) fixée sur le dit caisson fixe (61) du moteur du motoréducteur et au moins deux rayons (70) radiaux qui se déploient de la dite bride centrale (72) et qui terminent dans de respectifs segments périphériques (70) fixés sur le dit moyeu.
